# FASCICULE DE BREVET EUROPEEN

(11) **EP 2 861 876 B1**
(45) Date de publication et mention de la délivrance du brevet: **09.08.2017**
(21) Numéro de dépôt: 13730028.1
(22) Date de dépôt: 03.06.2013
(51) Int. Cl.: F16B 21/07

(54) **ELEMENTS MALE ET FEMELLE POUR L'ASSEMBLAGE PAR CLIPPAGE DE DEUX PIECES EN MATERIAU POLYMERE ET ASSEMBLAGE CORRESPONDANT**
MÄNNLICHE UND WEIBLICHE KOMPONENTEN FÜR DEN ZUSAMMENBAU DURCH EINRASTEN ZWEIER TEILE AUS EINEM POLYMERMATERIAL SOWIE ENTSPRECHENDE ANORDNUNG
MALE AND FEMALE COMPONENTS FOR ASSEMBLING BY CLIPPING TOGETHER TWO PARTS MADE OF POLYMER MATERIAL AND CORRESPONDING ASSEMBLY

(30) Priorité: 15.06.2012 FR 1255619
(43) Date de publication de la demande: 22.04.2015
(73) Titulaire: Renault S.A.S., 92100 Boulogne-Billancourt (FR)
(72) Inventeur: BOUILLON, Jean-Charles, F-78940 La Queue les Yvelines (FR)
(86) Numéro de dépôt international: PCT/FR2013/051254
(87) Numéro de publication internationale: WO 2013/186457

(56) Documents cités:
- EP-A1- 0 736 694
- WO-A1-2010/052148
- FR-A1- 2 777 050
- GB-A- 2 219 051
- JP-A- 2002 274 260
- US-A- 2 239 798
- US-A1- 2011 239 418

## Description

L'invention concerne des éléments mâle et femelle pour l'assemblage par clippage de deux pièces en matériau polymère, ainsi que l'assemblage correspondant. Un élément mâle selon le préambule de la revendication 1 et un élément femelle selon le préambule de la revendication 8 sont connus du document WO 20100/052148 A1.

Les clips sont couramment utilisés pour l'assemblage de pièces, en particulier pour l'assemblage de pièces en matériau polymère. L'assemblage par clip présente l'avantage de nécessiter de faibles investissements en moyens de montage et d'être rapide.

Toutefois, les clips en matériau polymère sont susceptibles d'être sensibles au vieillissement, ce qui peut engendrer la formation d'un jeu entre les parties du clip et par conséquent entre les pièces à assembler. Un tel jeu n'est pas souhaitable car il est susceptible de fragiliser le clip du fait des petits déplacements qui se produisent alors entre les pièces et d'engendrer des vibrations entre les pièces assemblées, sources de nuisances sonores.

Dans certaines applications, il est en outre nécessaire que les clips soient particulièrement résistants à l'arrachement, c'est-à-dire résistant à une traction exercée selon la direction de clippage.

Il existe donc un besoin pour réaliser des assemblages par clippage qui soient résistants et qui n'engendrent pas de jeu entre les pièces assemblées dans le temps.

A cet effet, l'invention concerne un élément mâle pour l'assemblage par clippage de deux pièces en matériau polymère, ledit élément mâle s'étendant suivant une direction de clippage et comprenant au moins un plan de symétrie contenant la direction de clippage, cet élément mâle comprenant de haut en bas dans la direction de clippage : une tête, une partie médiane, une base de section transversale croissante vers le bas, un support plan perpendiculaire au plan de symétrie, la tête présentant une forme conique suivant une section perpendiculaire au plan de symétrie et contenant la direction de clippage, la pointe du cône étant dirigée vers le haut, caractérisé en ce que la tête comporte au moins deux parois inférieures planes symétriques par rapport audit plan de symétrie, lesdites parois inférieures planes étant reliées chacune à une paroi latérale plane de la partie médiane, ces parois latérales planes étant symétriques par rapport au plan de symétrie, chaque paroi inférieure de la tête formant avec la paroi latérale de la partie médiane un angle de 100 à 120°, et en ce que la largeur de la tête, suivant une direction perpendiculaire audit plan de symétrie, est supérieure à la hauteur de la tête suivant la direction de clippage.

Un tel agencement permet, par coopération avec un élément femelle selon l'invention, un montage sans jeu suivant la direction de clippage, une bonne tenue à l'arrachement suivant cette même direction de clippage, une bonne tenue aux sollicitations transversales (perpendiculairement au plan de symétrie). De plus, cet élément mâle est peu sensible aux sollicitations longitudinales (perpendiculaires aux sollicitations transversales et à la direction de clippage). En outre, du fait de la forme particulière de la tête, cette dernière subit peu ou pas de déformation lors de sa fabrication. La forme conique permet également le pilotage et le centrage de l'élément mâle lorsqu'il est rapproché de l'élément femelle.

En outre, cet agencement permet de réduire la hauteur de l'élément mâle : ce dernier peut ainsi présenter une hauteur totale (dimension selon la direction de clippage de la tête, de la partie médiane et de la base) de 13 à 17 mm, par exemple de 15mm. Ceci est particulièrement avantageux lorsque l'élément mâle sert à assembler des pièces dont les environnements sont très contraints, comme par exemple pour l'assemblage de pièces de garniture d'habitacle de véhicule automobile, en particulier au niveau d'une porte.

Cet élément mâle peut être réalisé en tout matériau polymère, par exemple en polypropylène chargé ou non, présentant une rigidité suffisante pour ne pas se déformer aux températures d'utilisation, qui peuvent être comprises de -30°C à 100°C. Il sera par exemple réalisé par moulage.

Le rapport (a) de la largeur de la tête sur sa hauteur est de préférence inférieur ou égal à 1, par exemple de 0,4 à 1.

La hauteur de la tête peut être de 2 à 6 mm, par exemple de 3,8 mm. Cette hauteur de la tête représente par exemple 2/7^{ème} de la somme des hauteurs de la tête, la partie médiane et la base, par exemple de 1/3 à 1/4.

La hauteur de la partie médiane peut être de 1 à 3 mm, par exemple de 1,3 mm. Cette hauteur de la partie médiane représente par exemple 1/10^{ème} la somme des hauteurs de la tête, la partie médiane et la base, par exemple de 1/12 à 1/5ème.

La hauteur de la base peut être de 9/14^{ème}, par exemple de 3/5^{ème} à 4/5^{ème}.

La largeur de la tête peut être de 6 à 8mm par exemple de 6,8mm. Cette largeur peut représenter de 1/2 à 1/3 de la plus grande largeur de la base. Le rapport (a) entre la hauteur de tête et sa largeur est inversé par rapport aux proportions usuellement utilisées dans l'art antérieur. Cette tête a donc une forme générale « plate ». Cela lui donne une grande robustesse à l'arrachement, avec un encombrement limité.

Avantageusement et de manière non limitative, lesdites parois planes de la partie médiane sont parallèles audit plan de symétrie. La réalisation de l'élément mâle est alors simplifiée et particulièrement robuste. Toutefois, ces parois planes de la partie médiane peuvent former un angle de 0 à 5° avec le plan de symétrie, afin de faciliter le démoulage de l'élément mâle lors de sa fabrication.

Avantageusement et de manière non limitative, l'angle entre chaque paroi inférieure de la tête et la paroi latérale adjacente de la partie médiane peut être de 100 à 115°, par exemple 108°.

Avantageusement et de manière non limitative, le support plan est équipé d'au moins deux appuis situés symétriquement de part et d'autre de la base par rapport au plan de symétrie, lesdits appuis saillant perpendiculairement de la face du support solidarisée à la base. Ces appuis peuvent s'étendre le long de la base et former ainsi des nervures de part et d'autre de l'élément mâle.

De tels appuis permettent d'améliorer l'appui de l'élément femelle selon l'invention contre l'élément mâle, et favorisent davantage le maintien d'un jeu nul suivant la direction de clippage entre les deux éléments mâle et femelle. La hauteur des deux appuis selon la direction de clippage est par exemple de 1 mm, par exemple de 0,5 à 12 mm. Ces deux appuis compensent l'écart d'orientation entre la face inférieure du support plan de l'élément mâle, guidée par le style, portant les deux appuis et le support plan de l'élément femelle portant les languettes, lequel est de préférence perpendiculaire au sens de clippage.

Avantageusement et de manière non limitative, l'élément mâle peut comporter une ou plusieurs des caractéristiques suivantes :
- l'extrémité supérieure de la forme conique de la tête est arrondie, cette caractéristique permet notamment de faciliter l'insertion de la tête dans l'orifice de l'élément femelle, ainsi qu'un gain en compacité de l'ensemble mâle ;
- l'angle au sommet de la forme conique de la tête est de 70° à 90°, par exemple de 80°; ceci représente un compromis optimal entre les efforts de montage et le gain dimensionnel sur la hauteur totale.
- l'extrémité inférieure de la forme conique de la tête est reliée aux parois inférieures planes de la tête par des parois latérales planes parallèles au plan de symétrie, de telles parois latérales servent à renforcer les bords de la tête vis à vis des risques d'arrachement dans le cas d'un décentrage du clip par rapport aux languettes de l'élément femelle (l'ensemble accepte un défaut transversal de ±1,5mm).
- l'extrémité inférieure de la forme conique de la tête est reliée aux parois inférieures planes de la tête par des parois latérales planes parallèles au plan de symétrie, la dimension suivant la direction de clippage de ces parois latérales est de 0,5 à 1,5 mm. Cette dimension peut être sensiblement égale à la dimension desdits appuis. Cet agencement particulier peut favoriser la mise en appui sur les parois inférieures de la tête et les bords de l'orifice de l'élément femelle dans lequel est introduit l'élément mâle, et ainsi réduire, ou même supprimer, tout risque d'apparition d'un jeu suivant la direction de clippage entre les éléments mâle et femelle. De plus cet agencement permet des contacts francs de l'extrémité des languettes de l'élément femelle avec le dessous de la tête et la partie médiane. De façon opportune toutes les faces des extrémités des languettes de l'élément femelle ont ainsi des angles obtus. Ainsi, les arêtes à l'extrémité des languettes sont peu sensibles à la déformation lors de tractions d'arrachement.
- la base est au moins en partie évidée en son centre le long dudit support, cet évidement s'étendant en particulier parallèlement au plan de symétrie et perpendiculairement à la direction de clippage ; un évidement peut permettre d'éviter que la base ne soit visible sur la face du support opposée à la face supportant la base, en particulier du fait de formation de retassures lors du moulage de l'élément mâle,
- la hauteur totale de l'élément mâle, correspondant à sa dimension selon la direction de clippage depuis la face supérieure du support plan jusqu'à l'extrémité supérieure de la tête est comprise entre 13 et 17 mm, bornes comprises.

L'invention concerne également un élément femelle pour l'assemblage par clippage de deux pièces en matériau polymère, cet élément femelle étant conformé pour coopérer avec un élément mâle selon l'invention suivant une direction de clippage et présentant un plan de symétrie contenant la direction de clippage, ce plan de symétrie étant confondu avec le plan de symétrie de l'élément mâle lorsque ce dernier est clippé dans l'élément femelle. Cet élément femelle, qui comporte un support plan pourvu d'un orifice de réception de l'élément mâle, est conformé pour que, lorsque le support de l'élément mâle est en appui contre le support de l'élément femelle, les bords de l'orifice soient en contact avec les parois inférieures de la tête et les parois latérales de la partie médiane de l'élément mâle, sans jeu suivant la direction de clippage.

Ainsi, les bords de l'orifice sont en appui contre des parois formant un angle de 100 à 120° l'une avec l'autre, ce qui permet une coopération particulièrement stable entre les bords de l'orifice de l'élément femelle et l'élément mâle, lorsque l'élément mâle est clippé dans l'élément femelle, après l'insertion de la tête de l'élément mâle au travers de l'orifice de l'élément femelle.

Avantageusement et de manière non limitative, l'orifice de l'élément femelle peut comprendre au moins deux languettes planes symétriques par rapport au plan de symétrie, chaque extrémité libre d'une languette étant formée de deux parois d'extrémité planes inclinées d'un même angle que l'angle formé entre chaque paroi inférieure de la tête de l'élément mâle et la paroi latérale adjacente de la partie médiane, de sorte que ces parois d'extrémité épousent les parois inférieures et planes de l'élément mâle lorsque ce dernier est clippé dans l'élément femelle. Tel que déjà mentionné, cette forme particulière participe à l'absence de formation d'un jeu dans la direction de clippage entre l'élément femelle et l'élément mâle assemblés. De plus, cet agencement permet des contacts francs de l'extrémité des languettes avec le dessous de la tête et la partie médiane. De façon opportune, toutes les faces des extrémités des languettes ont ainsi des angles obtus. Ainsi, les arêtes à l'extrémité des languettes sont peu sensibles à la déformation lors de tractions d'arrachement.

Avantageusement et de manière non limitative, l'orifice de l'élément femelle comprend au moins deux languettes planes symétriques par rapport au plan de symétrie de l'élément mâle lorsque celui-ci est inséré dans l'orifice, ces languettes étant reliées au support par une zone de matière amincie dont l'épaisseur est inférieure à l'épaisseur du support et/ou à l'épaisseur de la languette, par exemple à l'épaisseur du support et de la languette.

Cette zone de matière amincie permet d'assurer une certaine flexibilité des languettes facilitant l'insertion de l'élément mâle au travers de l'orifice de l'élément femelle et participant également au maintien des extrémités des languettes sous la tête de l'élément mâle afin de réduire ou supprimer le jeu suivant la direction de clippage.

Cette zone de matière amincie commence à la ligne théorique de raccordement de la languette sur sa surface d'accueil, le support plan.

Le rapport de la profondeur d'amincissement local par rapport à l'épaisseur du support plan peut, de façon non exhaustive, être de 2/5^{ème}, voir de 1/5 à 1/2 suivant la nature du polymère.

La largeur de cet amincissement peut être de façon non exhaustive de 1 à 3mm, par exemple de 2,2 mm.

Cette zone de matière amincie peut être formée par exemple d'une rainure réalisée sur la face supérieure du support plan de l'élément femelle, à la base de chaque languette sur toute la longueur de la languette, cette rainure pouvant présenter une section transversale arrondie.

La distance entre l'appui du support plan de l'élément mâle et la zone de matière amincie de l'élément femelle peut être de 2,5 mm à 5 mm par exemple de 3,5 mm.

Lors du montage, c'est sur ces parties planes, entre l'amincissement et les deux appuis de support de part et d'autre de l'élément mâle, qu'est exercée la force d'assemblage appliquée dans le sens vertical. Une course supplémentaire est prévue dans la limite élastique des matériaux afin de garantir le passage des languettes sous la tête. Ceci favorise la conception à jeu nul entre ces deux parties et la réalisation de l'outillage au nominal. De plus, cette conception évite tous les frais de mise au point onéreux dans l'outillage.

Les éléments mâle et femelle selon l'invention peuvent être utilisés pour l'assemblage par clippage de pièces en matériau polymère telles que des garnitures d'habitacle de véhicule automobile, par exemple des garnitures de porte.

L'invention concerne également un assemblage de deux pièces en matériau polymère assemblées au moyen d'au moins une paire d'éléments mâle et femelle selon l'invention, chaque élément mâle ou femelle étant issu de matière avec l'une des pièces à assembler.

L'invention est maintenant décrite en référence aux dessins annexés, non limitatifs, dans lesquels :
- la figure 1 est une vue en perspective d'un assemblage de deux pièces en matériau polymère selon un mode de réalisation de l'invention, cet assemblage étant réalisé au moyen d'un élément mâle et d'un élément femelle selon un mode de réalisation de l'invention ;
- la figure 2 est une vue en coupe transversale de l'élément mâle et de l'élément femelle représentés sur la figure 1, perpendiculairement à leur plan de symétrie ;
- la figure 3 représente une vue en coupe transversale agrandie de la tête et de la partie médiane de l'élément mâle représenté sur les figures 1 et 2 ;
- la figure 4 représente une vue en coupe transversale agrandie de languettes de l'élément femelle représenté sur les figures 1 et 2.

Dans la présente description, les termes supérieur, respectivement haut, et inférieur, respectivement bas, font référence à la direction de clippage des éléments mâle et femelle. Cette direction de clippage correspond à une direction de rapprochement des éléments mâle et femelle à encliqueter. Sur les figures, cette direction de clippage correspond à la direction verticale Z d'un repère orthonormé axes X, Y, Z.

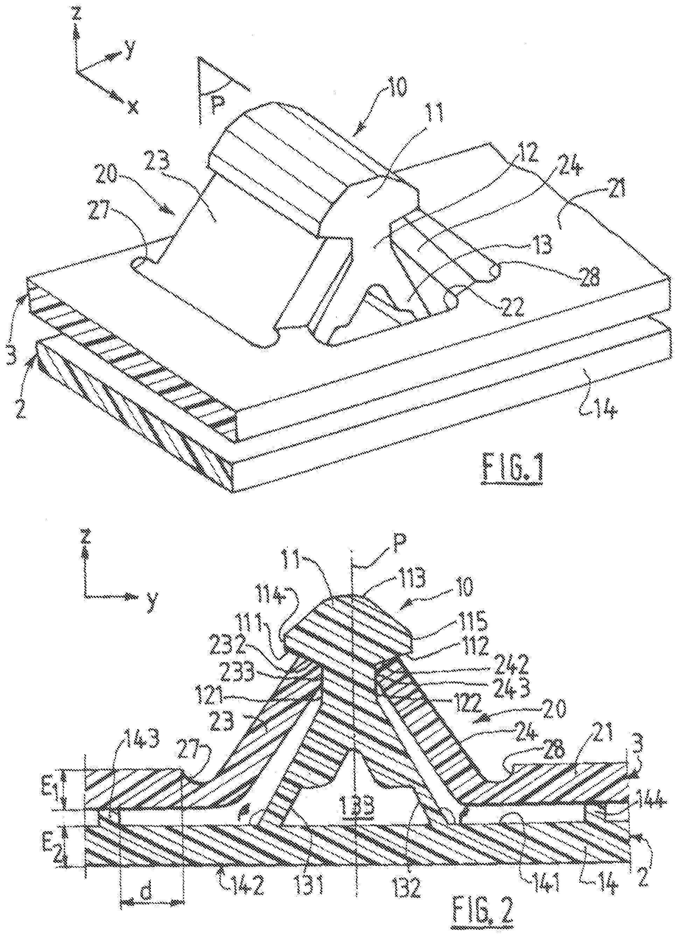

La figure 1 représente un assemblage 1 de deux pièces 2, 3 en matériau polymère assemblées au moyen d'au moins une paire d'éléments mâle 10 et femelle 20 selon l'invention.

Dans l'exemple représenté, l'élément mâle 10 est issu de matière avec la pièce 2 dont la face inférieure 142 est destinée à être une face visible. L'élément femelle 20 est issu de matière avec la pièce 3. Ces pièces 2 et 3 sont par exemple des éléments de garniture d'habitacle de voiture automobile, en particulier destinés à habiller un panneau de porte.

Le matériau polymère utilisé peut être du polypropylène chargé ou non.

L'élément mâle 10 s'étend suivant la direction de clippage Z et comprend au moins un plan de symétrie P contenant la direction de clippage Z.

Cet élément mâle 10 comprend de haut en bas dans la direction de clippage Z: une tête 11, une partie médiane 12, une base 13 de section transversale croissante vers le bas et un support plan 14 perpendiculaire au plan de symétrie P.

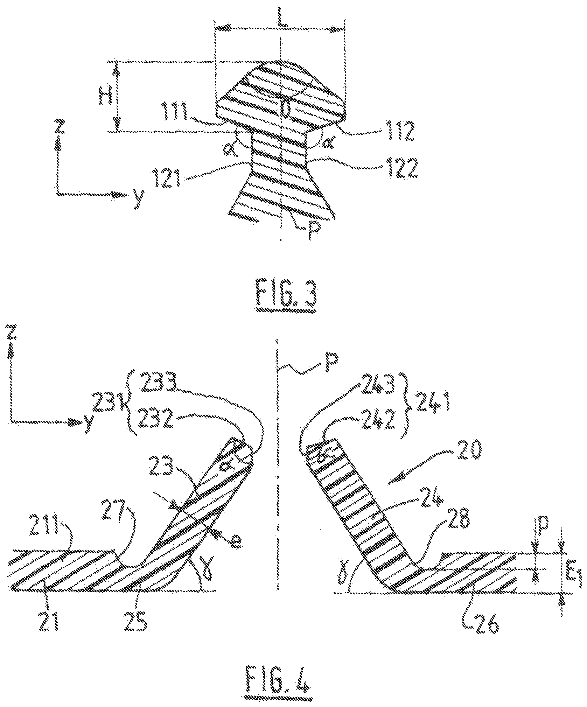

La tête 11 présente une forme conique suivant une section perpendiculaire au plan de symétrie P et contenant la direction de clippage (tel que visible sur les figures 2 et 3), la pointe du cône étant dirigée vers le haut.

La tête 11 comporte au moins deux parois inférieures planes 111 et 112 symétriques par rapport au plan de symétrie P.

L'extrémité supérieure 113 de la tête 11, qui correspond à l'extrémité de la forme conique, est arrondie.

L'angle au sommet O de la forme conique de la tête 11 est de 70° à 90°, par exemple de 80° (Fig.3).

L'extrémité inférieure de la forme conique de la tête 11 est reliée aux parois inférieures planes 111, 112 de la tête 11 par des parois latérales planes 114, 115 parallèles au plan de symétrie P.

La partie médiane 12 comprend deux parois latérales 121, 122 symétriques par rapport au plan de symétrie P. Dans l'exemple, ces parois latérales 121, 122 sont parallèles au plan de symétrie P.

Dans l'exemple, ces parois latérales 121, 122 de la partie médiane 12 et les parois inférieures 111, 112 de la tête 11 sont sensiblement de même dimension suivant une section perpendiculaire au plan de symétrie et contenant la direction de clippage (section correspondant à la section représentée sur la figure 2). Cette dimension est par exemple de 1 à 3 mm, de préférence de 2 à 2,5 mm.

La base 13 présente une forme évasée vers le bas. Elle peut être formée de deux parois latérales 131, 132 planes, symétriques par rapport au plan de symétrie P, tel que représenté sur les figures.

En outre, la base 13 présente une partie évidée 133 en son centre le long du support plan 14, tel que visible sur les figures 1 et 2.

Ces parois latérales 131, 132 forment un angle β avec le support 14 de 100 à 130°, par exemple de 115°. L'épaisseur de ces parois latérales 131, 132 peut être de 0,8 à 1,5 mm au niveau de la partie évidée 133.

Le support plan 14 de l'élément mâle 10 comprend une face supérieure 141 et une face opposée inférieure 142, cette dernière correspondant ainsi à la face visible de la pièce 2. La base 13 est solidaire de la face supérieure 141 dans l'exemple. Ce support plan 14 comprend également deux appuis 143, 144 situés symétriquement de part et d'autre de la base 13 par rapport au plan de symétrie P. Ces appuis 143, 144 s'étendent parallèlement au plan de symétrie P, sur toute la longueur de l'élément mâle 10 (autrement dit sur toute sa dimension suivant une direction perpendiculaire à la direction de clippage Z et parallèle au plan de symétrie P, à savoir l'axe X des figures. La dimension suivant la direction de clippage Z des appuis 143, 144 peut être de 0,5 à 12 mm suivant l'orientation de la face visible de style 142 par rapport à l'axe de montage de l'ensemble des clips d'une même pièce, ici, un exemple simple, le support plan 21 est parallèle au support plan 14 et la dimension de 1mm.

Selon l'invention, les parois inférieures planes 111, 112 de la tête sont reliées chacune à une paroi latérale plane 121, 122 respectivement, de la partie médiane 12, chaque paroi inférieure 111, 112 de la tête 11 formant avec la paroi latérale adjacente 121, 122 de la partie médiane un angle α de 100 à 120°, par exemple de 108° tel que représenté sur la figure 3.

Selon l'invention également, la largeur L de la tête 11, suivant une direction perpendiculaire au plan de symétrie P (correspondant à l'axe Y des figures), est supérieure à la hauteur H de la tête suivant la direction de clippage Z, tel que visible figures 2 et 3.

Cette hauteur H peut être de 2 à 6 mm, par exemple de 3,8 mm. La largeur L peut être de 5 à 8 par exemple de 6,8 mm.

Ainsi, la hauteur totale de l'élément mâle, correspondant à sa dimension selon la direction de clippage Z depuis la face supérieure 141 du support 14 jusqu'à l'extrémité supérieure 113 de la tête 11, peut être de 13 à 17 mm, par exemple de 15 mm. L'ensemble peut être compris dans un parallélépipède de 25 x 15 x 15 mm. L'épaisseur E2 du support 14 peut être de 2 à 3,5 mm, par exemple 2,5 mm.

L'élément femelle 20 présente le même plan de symétrie P contenant la direction de clippage Z que l'élément mâle 10 lorsque ce dernier est clippé dans l'élément femelle 20.

L'élément femelle 20 comporte un support plan 21 pourvu d'un orifice de réception 22 de l'élément mâle.

L'élément femelle 20 est conformé pour que, lorsque le support 14 de l'élément mâle 10 est en appui contre le support 21 de l'élément femelle 20, les bords de l'orifice de réception 22 soient en contact avec les parois inférieures 111, 112 de la tête et les parois latérales 121, 122 de la partie médiane 12 de l'élément mâle 10, sans jeu suivant la direction de clippage Z.

Dans l'exemple représenté, l'orifice de réception 22 comprend deux languettes planes 23, 24 symétriques par rapport au plan de symétrie P.

Chaque extrémité libre 231, 241 d'une languette 23, 24 est formée de deux parois d'extrémité planes 232, 233 ; 242, 243 respectivement, inclinées d'un même angle α que l'angle α formé entre chaque paroi inférieure 111, 112 de la tête 11 de l'élément mâle 10 et la paroi latérale adjacente 121, 122 de la partie médiane 12. Ainsi, tel que représenté sur la figure 2, ces parois d'extrémité planes 232, 233 ; 242, 243 épousent les parois inférieures 111, 112 et latérales planes 121, 122 de l'élément mâle 10 lorsque ce dernier est clippé dans l'élément femelle 20.

Chaque languette 23, 24 est reliée au support 21 par une zone de matière amincie 25, 26 respectivement, par rapport à l'épaisseur E1 du support 21 et à l'épaisseur e de la languette 23, 24.

Cette zone de matière amincie 25, 26 est située entre l'extrémité de la languette 231, 241 et l'appui 143, 144 du support 14 de l'élément mâle 10 lorsque l'élément mâle 10 est clippé dans l'élément femelle 20.

Dans l'exemple, cette zone de matière amincie 25, 26 est obtenue par la réalisation d'une rainure 27, 28 réalisée sur la face supérieure 211 du support 21 de l'élément femelle 20, à la base de chaque languette 23, 24 sur toute la longueur de la languette (dimension suivant axe X des figures). Cette rainure 27, 28 présente une section transversale arrondie. La zone de matière amincie 25, 26 représentée sur les figures est en retrait de la face supérieure 211 du support 21 d'une distance allant de 1/5 à 1/2 de l'épaisseur E1. L'épaisseur e des languettes 23, 24 est égale au 4/5^{ème} de l'épaisseur E1 du support 21, par exemple de 1,5 mm à 3 mm.

Chaque zone amincie 25, 26 est séparée de l'appui 143, 144 correspondant de l'élément mâle 10 d'une distance de 2,5 à 5 mm, par exemple 3,5 mm.

L'angle d'inclinaison γ des languettes 23, 24 par rapport au plan du support 21 peut être de 100 à 130°, par exemple 118° lorsque l'élément mâle est clippé dans l'élément femelle. Il y a de préférence un écart entre l'angle béta des parois latérales 131, 132 de la base 13 et l'angle (180-γ) de 1 à 5°, par exemple 3° afin de garantir le contact des extrémités 232 et 242 des languettes 23 et 24 sur l'élément mâle 10.

A titre d'exemple, il est possible de réaliser un élément femelle 20 présentant les dimensions suivantes :
Epaisseur e d'une languette 23, 24 : 2 mm
Epaisseur E du support 21 : 2,5 mm

## Revendications

1. Elément mâle (10) pour l'assemblage par clippage de deux pièces (2, 3) en matériau polymère, ledit élément mâle (10) s'étendant suivant une direction de clippage (Z) et comprenant au moins un plan de symétrie (P) contenant la direction de clippage (Z), cet élément mâle comprenant de haut en bas dans la direction de clippage : une tête (11), une partie médiane (12), une base (13) de section transversale croissante vers le bas, un support plan (14) perpendiculaire au plan de symétrie (P), la tête (11) présentant une forme conique suivant une section perpendiculaire au plan de symétrie (P) et contenant la direction de clippage (Z), la pointe du cône étant dirigée vers le haut, **caractérisé en ce que** la tête (11) comporte au moins deux parois inférieures planes (111, 112) symétriques par rapport audit plan de symétrie (P), lesdites parois inférieures planes (111, 112) étant reliées chacune à une paroi latérale plane (121, 122) de la partie médiane (12), ces parois latérales planes (121, 122) étant symétriques par rapport au plan de symétrie, chaque paroi inférieure (111, 112) de la tête formant avec la paroi latérale (121, 122) de la partie médiane un angle (α) de 100 à 120°, et **en ce que** la largeur (L) de la tête, suivant une direction perpendiculaire audit plan de symétrie (P), est supérieure à la hauteur (H) de la tête suivant la direction de clippage (Z).

2. Elément mâle (10) selon la revendication 1, **caractérisé en ce que** lesdites parois planes (121, 122) de la partie médiane sont parallèles audit plan de symétrie (P).

3. Elément mâle (10) selon l'une des revendications 1 ou 2, **caractérisé en ce que** l'angle (α) entre chaque paroi inférieure de la tête et la paroi latérale adjacente de la partie médiane est de 100 à 115°.

4. Elément mâle (10) selon l'une des revendications 1 à 3, **caractérisé en ce que** ledit support plan (14) est équipé d'au moins deux appuis (143, 144) situés symétriquement de part et d'autre de la base (13) par rapport au plan de symétrie (P), lesdits appuis (143, 144) saillant perpendiculairement de la face (141) du support (14) solidarisée à la base (13).

5. Elément mâle (10) selon l'une des revendications 1 à 4, **caractérisé en ce que** les parois inférieures (111, 112) de la tête et les parois latérales (121, 122) de la partie médianes sont sensiblement de même dimension suivant une section perpendiculaire au plan de symétrie (P) et contenant la direction de clippage (Z).

6. Elément mâle (10) selon l'une des revendications 1 à 5, **caractérisé en ce qu'**il comporte au moins une des caractéristiques suivantes :
- l'extrémité supérieure (113) de la forme conique de la tête (11) est arrondie,
- l'angle au sommet (O) de la forme conique de la tête est de 70 à 90°,
- l'extrémité inférieure de la forme conique de la tête (11) est reliée aux parois inférieures planes (111, 112) de la tête par des parois latérales planes (114, 115) parallèles au plan de symétrie (P),
- l'extrémité inférieure de la forme conique de la tête est reliée aux parois inférieures planes (111, 112) de la tête par des parois latérales planes (114, 115) parallèles au plan de symétrie (P), la dimension suivant la direction de clippage de ces parois latérales planes (114, 115) est de 0,5 à 1,5 mm.
- la base (13) est au moins en partie évidée en son centre le long dudit support (14).

7. Elément mâle (10) selon l'une des revendications 1 à 6, **caractérisé en ce que** la hauteur totale de l'élément mâle, correspondant à sa dimension selon la direction de clippage (Z) depuis la face supérieure (141) du support (14) solidarisée à la base (13) jusqu'à l'extrémité supérieure (113) de la tête (11) est comprise entre 13 et 17 mm.

8. Elément femelle (20) pour l'assemblage par clippage de deux pièces (2, 3) en matériau polymère, ledit élément femelle (20) étant conformé pour coopérer avec un élément mâle (10) selon l'une des revendications 1 à 7 suivant une direction de clippage (Z) et présentant un plan de symétrie (P) contenant la direction de clippage (Z), ce plan de symétrie (P) étant confondu avec le plan de symétrie (P) de l'élément mâle (10) lorsque ce dernier est clippé dans l'élément femelle (20), ledit élément femelle (20) comportant un support plan (21) pourvu d'un orifice (22) de réception de l'élément mâle (10), **caractérisé en ce que** cet élément femelle (20) est conformé pour que, lorsque le support (14) de l'élément mâle (10) est en appui contre le support (21) de l'élément femelle, les bords de l'orifice (22) soient en contact avec les parois inférieures (111, 112) de la tête (11) et les parois latérales (121, 122) de la partie médiane (12) de l'élément mâle (10), sans jeu suivant la direction de clippage (Z).

9. Elément femelle (20) selon la revendication 8, **caractérisé en ce que** l'orifice (22) comprend au moins deux languettes planes (23, 24) symétriques par rapport au plan de symétrie (P), chaque extrémité libre (231, 232) d'une languette (23, 24) étant formée de deux parois d'extrémité planes (232, 233 ; 242, 243) inclinées d'un même angle (α) que l'angle (α) formé entre chaque paroi inférieure (111, 112) de la tête de l'élément mâle et la paroi latérale (121, 122) adjacente de la partie médiane, de sorte que ces parois d'extrémité (232, 233 ; 242, 243) épousent les parois inférieures (111, 112) et latérales (121, 122) de l'élément mâle lorsque ce dernier est clippé dans l'élément femelle.

10. Elément femelle (20) selon la revendication 8 ou 9, **caractérisé en ce que** l'orifice (22) comprend au moins deux languettes planes (23, 24) symétriques par rapport au plan de symétrie (P), ces languettes étant reliées au support (21) par une zone de matière amincie (25, 26) dont l'épaisseur est inférieure à l'épaisseur du support (14) et/ou à l'épaisseur de la languette (23, 24), cette zone de matière amincie (25, 26) étant éventuellement située à une distance (d) prédéterminée de l'appui (143, 144) du support (14) de l'élément mâle (10) lorsque l'élément mâle est clippé dans l'élément femelle.

11. Assemblage de deux pièces (2, 3) en matériau polymère **caractérisées en ce qu'**elles sont assemblées au moyen d'au moins une paire formée d'un élément mâle (10) selon l'une des revendications 1 à 7 et d'un élément femelle (20) selon l'une des revendications 8 à 10, chaque élément mâle (10) ou femelle (20) étant issu de matière avec l'une des pièces à assembler.

## Patentansprüche

1. Männliche Komponente (10) für den Zusammenbau durch Einrasten zweier Teile (2, 3) aus einem Polymermaterial, wobei sich die männliche Komponente (10) in einer Einrastrichtung (Z) erstreckt und mindestens eine Symmetrieebene (P) umfasst, welche die Einrastrichtung (Z) enthält, wobei diese männliche Komponente von oben nach unten in der Einrastrichtung umfasst: einen Kopf (11), einen mittleren Abschnitt (12), eine Basis (13) mit einem Querschnitt, der nach unten gekreuzt ist, einen ebenen Träger (14) rechtwinklig zur Symmetrieebene (P), wobei der Kopf (11) eine konische Form in einem Schnitt rechtwinklig zur Symmetrieebene (P) aufweist und die Einrastrichtung (Z) umfasst, wobei die Spitze des Konus nach oben gerichtet ist, **dadurch gekennzeichnet, dass** der Kopf (11) mindestens zwei ebene untere Wände (111, 112) umfasst, die in Bezug auf die Symmetrieebene (P) symmetrisch sind, wobei die ebenen unteren Wände (111, 112) jeweils mit einer ebenen Seitenwand (121, 122) des mittleren Abschnitts (12) verbunden sind, wobei diese ebenen Seitenwände (121, 122) in Bezug auf die Symmetrieebene symmetrisch sind, wobei jede untere Wand (111, 112) des Kopfs mit der Seitenwand (121, 122) des mittleren Abschnitts einen Winkel (α) von 100 bis 120° bildet, und dadurch, dass die Breite (L) des Kopfs, in einer Richtung rechtwinklig zur Symmetrieebene (P), größer ist als die Höhe (H) des Kopfs in der Einrastrichtung (Z).

2. Männliche Komponente (10) nach Anspruch 1, **dadurch gekennzeichnet, dass** die ebenen Wände (121, 122) des mittleren Abschnitts parallel zur Symmetrieebene (P) sind.

3. Männliche Komponente (10) nach einem der Ansprüche 1 oder 2, **dadurch gekennzeichnet, dass** der Winkel (α) zwischen jeder unteren Wand des Kopfs und der angrenzenden Seitenwand des mittleren Abschnitts 100 bis 115° beträgt.

4. Männliche Komponente (10) nach einem der Ansprüche 1 bis 3, **dadurch gekennzeichnet, dass** der ebene Träger (14) mit mindestens zwei Stützen (143, 144) ausgestattet ist, die symmetrisch auf beiden Seiten der Basis (13) in Bezug auf die Symmetrieebene (P) angeordnet sind, wobei die Stützen (143, 144) rechtwinklig von der Fläche (141) des Trägers (14) fest verbunden mit der Basis (13) vorstehen.

5. Männliche Komponente (10) nach einem der Ansprüche 1 bis 4, **dadurch gekennzeichnet, dass** die unteren Wände (111, 112) des Kopfs und die Seitenwände (121, 122) des mittleren Abschnitts im Wesentlichen die gleiche Abmessung in einem Schnitt rechtwinklig zur Symmetrieebene (P) aufweisen und die Einrastrichtung (Z) enthalten.

6. Männliche Komponente (10) nach einem der Ansprüche 1 bis 5, **dadurch gekennzeichnet, dass** sie mindestens eine der folgenden Charakteristiken umfasst:
- das obere Ende (113) der konischen Form des Kopfs (11) ist abgerundet,
- der Scheitelwinkel (O) der konischen Form des Kopfs beträgt 70 bis 90°,
- das untere Ende der konischen Form des Kopfs (11) ist mit den ebenen unteren Wänden (111, 112) des Kopfs durch zur Symmetrieebene (P) parallele ebene Seitenwände (114, 115) verbunden,
- das untere Ende der konischen Form des Kopfs ist mit den ebenen unteren Wänden (111, 112) des Kopfs durch zur Symmetrieebene (P) parallele Seitenwände (114, 115) verbunden, die Abmessung in der Einrastrichtung dieser ebenen Seitenwände (114, 115) beträgt von 0,5 bis 1,5 mm,
- die Basis (13) weist mindestens teilweise in ihrem Zentrum entlang des Trägers (14) eine Ausnehmung auf.

7. Männliche Komponente (10) nach einem der Ansprüche 1 bis 6, **dadurch gekennzeichnet, dass** die Gesamthöhe der männlichen Komponente, die ihrer Abmessung in der Einrastrichtung (Z) von der oberen Fläche (141) des Trägers (14) fest verbunden mit der Basis (13) bis zum oberen Ende (113) des Kopfs (11) entspricht, zwischen 13 und 17 mm beträgt.

8. Weibliche Komponente (20) für den Zusammenbau durch Einrasten zweier Teile (2, 3) aus einem Polymermaterial, wobei die weibliche Komponente (20) ausgelegt ist, mit einer männlichen Komponente (10) nach einem der Ansprüche 1 bis 7 in einer Einrastrichtung (Z) zusammenzuwirken, und eine Symmetrieebene (P) aufweist, welche die Einrastrichtung (Z) umfasst, wobei diese Symmetrieebene (P) mit der Symmetrieebene (P) der männlichen Komponente (10) zusammenfällt, wenn diese Letztere in die weibliche Komponente (20) einrastet, wobei die weibliche Komponente (20) einen ebenen Träger (21) umfasst, der mit einer Öffnung (22) zur Aufnahme der männlichen Komponente (10) versehen ist, **dadurch gekennzeichnet, dass** diese weibliche Komponente (20) derart ausgelegt ist, dass, wenn der Träger (14) der männlichen Komponente (10) gegen den Träger (21) der weiblichen Komponente anliegt, die Ränder der Öffnung (22) mit den unteren Wänden (111, 112) des Kopfs (11) und den Seitenwänden (121, 122) des mittleren Abschnitts (12) des männlichen Elements (10) ohne Spiel in der Einrastrichtung (Z) in Kontakt stehen.

9. Weibliche Komponente (20) nach Anspruch 8, **dadurch gekennzeichnet, dass** die Öffnung (22) mindestens zwei ebene Zungen (23, 24), die in Bezug auf die Symmetrieebene (P) symmetrisch sind, umfasst, wobei jedes freie Ende (231, 232) einer Zunge (23, 24) aus zwei ebenen Endwänden (232, 233; 242, 243) gebildet ist, die unter demselben Winkel (α) wie dem Winkel (α) geneigt sind, der zwischen jeder unteren Wand (111, 112) des Kopfs der männlichen Komponente und der angrenzenden Seitenwand (121, 122) des mittleren Abschnitts gebildet ist, so dass diese Endwände (232, 233; 242, 243) an die unteren Wände (111, 112) und Seitenwände (121, 122) der männlichen Komponente anliegen, wenn diese Letztere in die weibliche Komponente einrastet.

10. Weibliche Komponente (20) nach Anspruch 8 oder 9, **dadurch gekennzeichnet, dass** die Öffnung (22) mindestens zwei ebene Zungen (23, 24) umfasst, die in Bezug auf die Symmetrieebene (P) symmetrisch sind, wobei diese Zungen mit dem Träger (21) durch eine Zone (25, 26) aus dünnerem Material verbunden sind, dessen Dicke kleiner ist als die Dicke des Trägers (14) und/oder als die Dicke der Zunge (23, 24), wobei diese Zone (25, 26) aus dünnerem Material gegebenenfalls in einem vorherbestimmten Abstand (d) von der Stütze (143, 144) des Trägers (14) der männlichen Komponente (10) angeordnet ist, wenn die männliche Komponente in die weibliche Komponente einrastet.

11. Zusammenbau zweier Teile (2, 3) aus Polymermaterial, **dadurch gekennzeichnet, dass** diese mittels mindestens eines Paars zusammengebaut werden, das aus einer männlichen Komponente (10) nach einem der Ansprüche 1 bis 7 und einer weiblichen Komponente (20) nach einem der Ansprüche 8 bis 10 gebildet ist, wobei jede männliche (10) oder weibliche (20) Komponente von dem Material eines der zusammenzubauenden Teile ausgeht.

## Claims

1. Male element (10) for assembling by clip-fitting two components (2, 3) of polymer material, the male element (10) extending in a clip-fitting direction (Z) and comprising at least one plane of symmetry (P) which contains the clip-fitting direction (Z), this male element comprising from top to bottom in the clip-fitting direction: a head (11), a central portion (12), a base (13) having a cross section which increases in a downward direction, a planar support (14) which is perpendicular relative to the plane of symmetry (P), the head (11) having a conical shape in a cross section which is perpendicular relative to the plane of symmetry (P) and which contains the clip-fitting direction (Z), the tip of the cone being directed upward, **characterized in that** the head (11) comprises at least two planar lower walls (111, 112) which are symmetrical with respect to the plane of symmetry (P), the planar lower walls (111, 112) each being connected to a planar lateral wall (121, 122) of the central portion (12), these planar lateral walls (121, 122) being symmetrical relative to the plane of symmetry, each lower wall (111, 112) of the head forming with the lateral wall (121, 122) of the central portion an angle (a) of from 100 to 120°, and **in that** the width (L) of the head, in a direction perpendicular relative to the plane of symmetry (P), is greater than the height (H) of the head in the clip-fitting direction (Z).

2. Male element (10) according to Claim 1, **characterized in that** the planar walls (121, 122) of the central portion are parallel with the plane of symmetry (P).

3. Male element (10) according to Claim 1 or Claim 2, **characterized in that** the angle (a) between each lower wall of the head and the adjacent lateral wall of the central portion is from 100 to 115°.

4. Male element (10) according to one of Claims 1 to 3, **characterized in that** the planar support (14) is provided with at least two support members (143, 144) which are located symmetrically at one side and the other of the base (13) relative to the plane of symmetry (P), the support members (143, 144) protruding perpendicularly from the face (141) of the support (14) which is fixedly joined to the base (13).

5. Male element (10) according to one of Claims 1 to 4, **characterized in that** the lower walls (111, 112) of the head and the lateral walls (121, 122) of the central portion are substantially of the same size in a cross section which is perpendicular to the plane of symmetry (P) and which contains the clip-fitting direction (Z).

6. Male element (10) according to one of Claims 1 to 5, **characterized in that** it comprises at least one of the following features:
- the upper end (113) of the conical shape of the head (11) is rounded,
- the angle at the tip (O) of the conical shape of the head is from 70 to 90°,
- the lower end of the conical shape of the head (11) is connected to the planar lower walls (111, 112) of the head by planar lateral walls (114, 115) which are parallel with the plane of symmetry (P),
- the lower end of the conical shape of the head is connected to the planar lower walls (111, 112) of the head by planar lateral walls (114, 115) which are parallel with the plane of symmetry (P) and the dimension in the clip-fitting direction of these planar lateral walls (114, 115) is from 0.5 to 1.5 mm,
- the base (13) is at least partially recessed at the center thereof along the support (14).

7. Male element (10) according to one of Claims 1 to 6, **characterized in that** the total height of the male element, corresponding to the dimension thereof in the clip-fitting direction (Z) from the upper face (141) of the support (14), which face is fixedly joined to the base (13), to the upper end (113) of the head (11), is between 13 and 17 mm.

8. Female element (20) for assembling by clip-fitting two components (2, 3) of polymer material, the female element (20) being shaped to cooperate with a male element (10) according to one of Claims 1 to 7, in a clip-fitting direction (Z) and having a plane of symmetry (P) which contains the clip-fitting direction (Z), this plane of symmetry (P) being aligned with the plane of symmetry (P) of the male element (10) when the male element is clip-fitted in the female element (20), the female element (20) comprising a planar support (21) which is provided with a hole (22) for receiving the male element (10), **characterized in that** this female element (20) is shaped so that, when the support (14) of the male element (10) is in abutment with the support (21) of the female element, the edges of the hole (22) are in contact with the lower walls (111, 112) of the head (11) and the lateral walls (121, 122) of the central portion (12) of the male element (10), without any play in the clip-fitting direction (Z).

9. Female element (20) according to Claim 8, **characterized in that** the hole (22) comprises at least two planar tongues (23, 24) which are symmetrical relative to the plane of symmetry (P), each free end (231, 232) of a tongue (23, 24) being formed by two planar end walls (232, 233; 242, 243) which are inclined through the same angle (a) as the angle (a) formed between each lower wall (111, 112) of the head of the male element and the adjacent lateral wall (121, 122) of the central portion, so that these end walls (232, 233; 242, 243) correspond to the lower walls (111, 112) and lateral walls (121, 122) of the male element when the male element is clip-fitted into the female element.

10. Female element (20) according to Claim 8 or Claim 9, **characterized in that** the hole (22) comprises at least two planar tongues (23, 24) which are symmetrical relative to the plane of symmetry (P), these tongues being connected to the support (21) by a thin zone (25, 26) of material whose thickness is less than the thickness of the support (14) and/or the thickness of the tongue (23, 24), this thin zone (25, 26) of material optionally being located at a predetermined distance (d) from the support member (143, 144) of the support (14) of the male element (10) when the male element is clip-fitted into the female element.

11. Assembly of two components (2, 3) of polymer material, **characterized in that** they are assembled using at least one pair formed by a male element (10) according to one of Claims 1 to 7, and a female element (20) according to one of Claims 8 to 10, each male element (10) or female element (20) being integral with one of the components to be assembled.
